# EUROPEAN PATENT APPLICATION

(11) **EP 2 104 052 A1**
(43) Date of publication of application: **23.09.2009**
(21) Application number: 08250960.5
(22) Date of filing: 19.03.2008
(51) Int. Cl.: G06F 21/20

(54) **Authentication system and method**

(71) Applicant: British Telecommunications Public Limited Company, London EC1A 7AJ (GB)
(72) Inventor: The designation of the inventor has not yet been filed
(74) Representative: Nash, Roger William

(57) **Abstract**

An authentication method and system in which a person that requests to be authenticated to for example a service provider, an application or a device, must instead of submitting a password perform a task in the form of a sequence of actions on a user device. The task varies between each access attempt and the person has to follow one or more rules, which are different for each user, when performing the task. An authentication server checks that the person has performed the task in accordance with the rules and if so authenticates the person. Preferably, the task is performed in a virtual environment displayed on the user device.

## Description

### Technical field

The present invention relates to an authenticating method and an authentication system for authenticating a user to a device, an application or a service provider.

### Background to the invention and Prior art

There are many different ways to authenticate a person, i.e. proving that the person is the person he/she claims to be. Biometric identification like fingerprints or iris recognition is secure but expensive. Therefore in most cases a person still has to enter a password of some kind in order to get authenticated. A password is something that the user has to remember; it can be a PIN-code, a word or a name, like the maiden-name of the user's mother. The password is compared to a stored password in a server or a password stored in a memory in the device. If the entered password is identical to a password stored for that user then the user is authenticated.

It is however very important to create passwords that cannot easily be guessed by an attacker. The most popular attack on passwords, the 'dictionary attack' is based on the observable fact that the majority of users are repeatedly choosing a few simple passwords. Certain systems are trying to force users to choose less obvious passwords by enforcing rules on minimum length, the use of mixed case letters and digits etc. However, those efforts, whilst improving security, reduce usability as users are unable to memorise them, leading too often to complex passwords being attached to the monitor of the computer, available to a casual passer-by.

A further disadvantage with known passwords is that if an attacker spying on a user via a camera or on-line via spy-ware manages to catch the keystrokes when the user enters the PIN-code or password he immediately has access to the password or PIN-code and can directly use it in an attack.

### Summary of invention

According to a first aspect of the invention there is provided a method for authenticating a user comprising the steps of:
providing a user in an enrolment phase with rules to be followed in performance of a task which varies between access attempts; said task being performed as a sequence of actions on a user device;
storing an authorisation procedure executable, for each variant of said task, to find whether an action sequence belongs to a plurality of acceptable action sequences which accord with said rules,
receiving in a subsequent access attempt from said user device a recording of a sequence of actions carried out by the user on a user device in performing a given variant of said task;
finding whether said action sequence belongs to a plurality of acceptable action sequences for the given variant of the task by executing said authorisation procedure; and
authenticating the user if the received sequence of actions does belong to a plurality of acceptable action sequences for the given variant of the task.

The advantage of this aspect of the invention is that since the task varies between each access attempt it will be very difficult for an impostor to figure out how to perform the task, especially since the impostor does not know which rules to follow when performing the task. Since a legitimate user can perform a task according to his own preferences as long as he follows the rules, a user determined variation is induced into a successful access attempt. Such variations will confuse the impostor making it very difficult for him to succeed in an access attempt.

In preferred embodiments the task is performed in a virtual environment displayed on the user device. The virtual environment can be designed in many different ways, for example as a computer game. The advantage of the virtual environment is that it will be easy for a legitimate user to remember which actions not to do or do in the environment while it will confuse an impostor since there is no clear indication in the environment what he is supposed to do.

The virtual environment can be a closed world. The advantage of having a closed world is that it is easier to verify adherence to rules because the number of elements and the number of their possible interactions is limited. It is also possible to more precisely determine an actual level of security, as the number of all possible combinations is known. Further, a closed world does not require a lot of memory to store.

In a second aspect there is provided system for authenticating a user comprising a user device, an authentication server and means for communicating between the device and the server;
the system comprising means for storing, for each user, rules to be followed in performance of the task; and
means for storing an authorisation procedure;
said user device comprising means for receiving user input commands and means for recording user actions when the user performs a task;
said authentication server comprising means for receiving a recording of a sequence of actions performed by the user on said user device;
means for executing the authorisation procedure for a given variant of the task in order to find whether the received action sequence belongs to a plurality of acceptable action sequences which accord to said rules; and
means for authenticating the user if the received sequence of actions is one of said plurality of acceptable action sequences for the given variant of the task.

The advantage of the authentication system is that it provides a more secure authentication since it makes it more difficult for an impostor to figure out a "password" by eavesdropping on successful authentication attempts.

There now follows, by way of example only, a description of specific embodiments of the present invention.

### Brief description of the drawings

Figure 1 provides a schematic overview of a system according to a first embodiment of the invention.
Figure 2 shows the authentication server of the system.
Figure 3 shows a flowchart of the authentication method used in the system.
Figures 4 -6 show an interactive virtual environment provided on the client computer of the system.
Figure 7 shows the rule database stored on the server's hard disk.
Figure 8 shows a second embodiment where the interactive virtual environment is built on top of a spreadsheet application.

### Detailed description

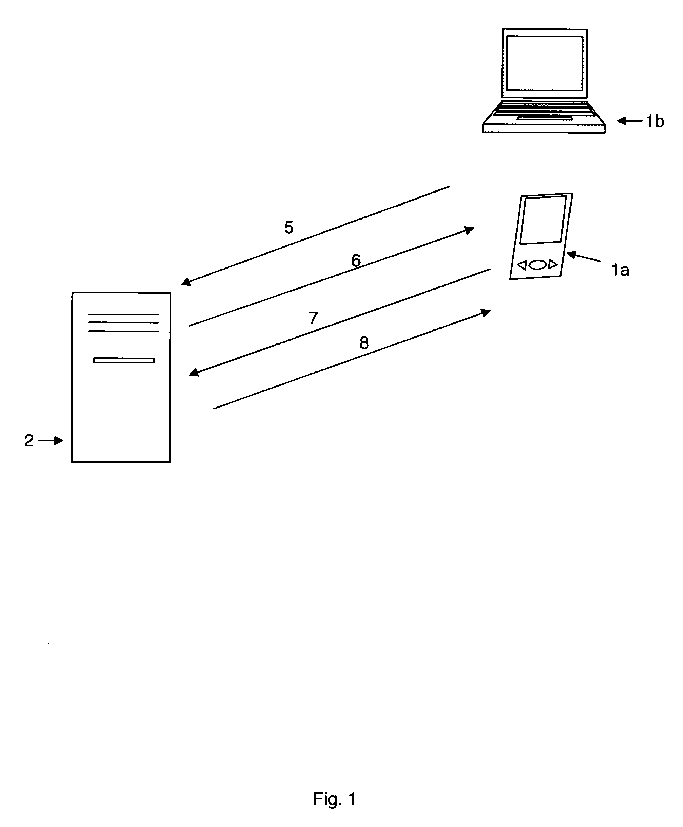

Figure 1 provides a schematic overview of a system used in a first embodiment of the invention.

A user having a device such as a PDA (1a) or a computer (1b) has to authenticate himself to for example a device, a service provider or an application. The person needs for example to unlock the PDA by providing a PIN-code or to get access to a WLAN in an airport terminal or to get connected to his bank to perform an on-line transaction.

In the authentication process a client program in the user device (1) connects (5) to an authentication server (2), either directly or via a service provider. The authentication server (2) challenges (6) the user to submit a password in the form of a sequence of actions performed on the user device. The user submits the sequence of actions (7) to the server, the server executes an authentication procedure in order to find whether the action sequence belongs to a plurality of acceptable action sequences; if so the user is authenticated (8) otherwise the user gets a message that authentication failed.

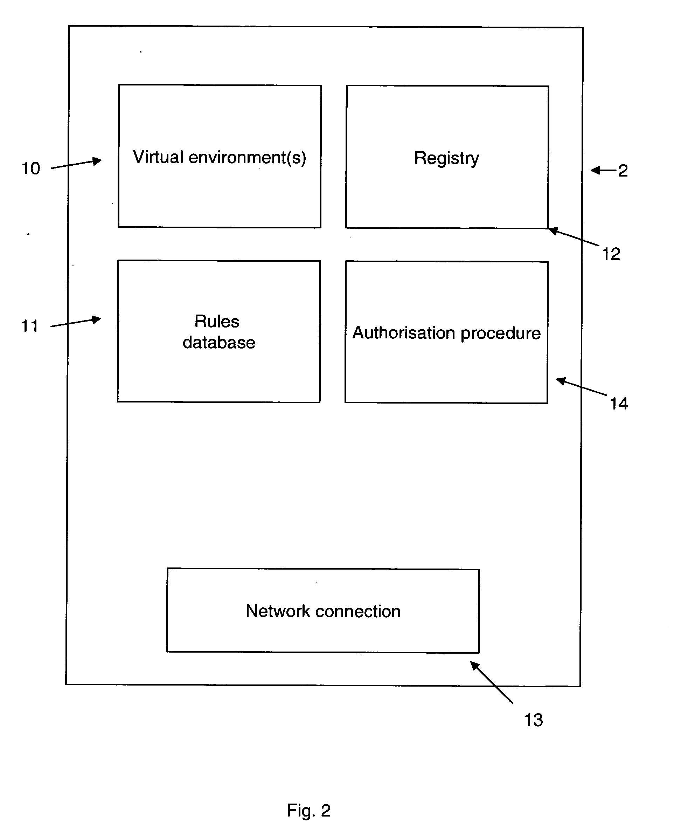

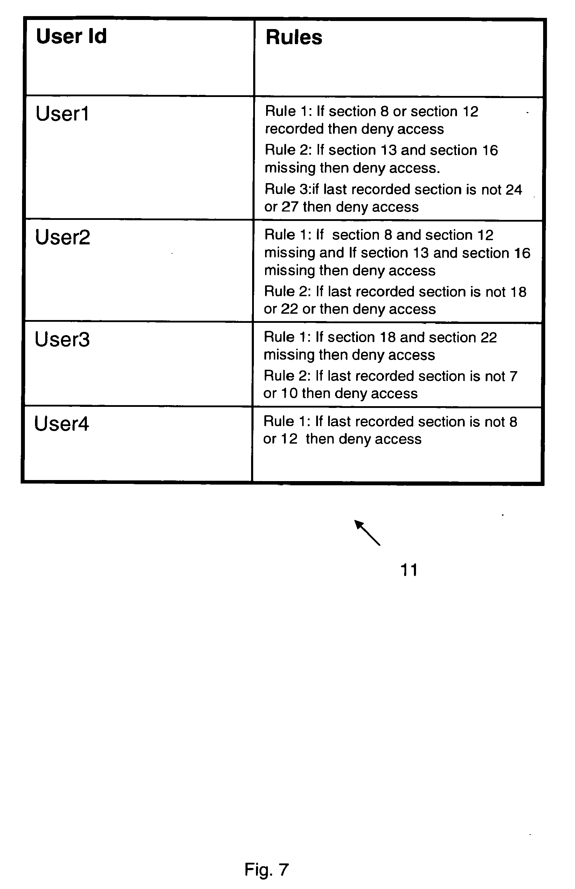

The authentication method and system according to the first embodiment will now be described in relation to figure 2. The authentication server (2) comprises a store (11) storing rules for each user. As can be seen in figure 7 each user is associated with at least one or more rules. When a user performs a task in the form of a sequence of actions during the authentication process, the user must follow the user-specific rule or rules. The task which the user has to perform can also be stored as a rule in the rules store. The task can for example be to always go to a specific destination in the virtual environment.

Rules can have two forms of obligations: things that the user must do and things that the user must not do. In a simple case a regular expression can state what is allowed or what is not allowed. For example, the expression "must contain (1,2,(4|5),(8-12))" tells that the received sequence must be a sequence that starts with 1,2 then 4 or 5 and finally something between 8 and 12. For example, the sequence 32,6,1,2,4,9,45,33 satisfies the rule and if this is the only rule then the sequence will be accepted. Similarly, the expression must-not(6|7) tells that there must be no occurrence of segments 6 or 7. The same sentence will be rejected as it contains 6. For more complex rules there are other, better suited formal languages to describe them: context free languages and finally contextual ones. Defining rules is like writing a small program in one of specialised pattern-matching languages. There is a variety of them, starting from AWK, to TCL/TK, Perl etc.

The authentication server also comprises a store (14) that stores an authorisation procedure which is used to determine if a sequence of actions taken by a user when performing a task is performed in accordance with the rules.

The authentication server (2) can also comprise a virtual environment store (10) in which one or more virtual environments used in further embodiments of the invention are stored.

In case different virtual environments are used for different users, an indication of which virtual environments are used for each user is also stored in the database.
The authentication server is further equipped with communication means (13) to communicate with the device and with a registry (12) that holds the current status of the authentication. The latter includes information about the task and about the record of user actions performed while performing the task.

Before a user can use the authentication server the user has to register with the server in an enrolment phase. When he registers he is instructed, if required, to download a virtual environment to an authentication client in the user device. Preferably, a part of the virtual environment is downloaded to the client and stored there, namely a program that performs visualisation and user interaction. The flow of the environment is however controlled by the server. However, the entire virtual environment could be downloaded to the device once or it could reside on the server and the user device could connect to it each time the user requests to be authenticated. Instead of sending an ordinary password to the user the authentication entity sends one.or more rules to the user which he has to follow when performing a task. The rule or rules describe in plain text what the user has to do or must not do when performing the task. As with all other passwords the rule or rules are not stored on the device but the user has to remember them. The rules are sent to the user for example by regular mail or e-mail.

If the device is not already fitted with an authentication client such a client, in the form of a software program, can be downloaded to the user device from the server (2) over a network or it could be loaded on the device from for example a CD-ROM or a USB memory. This program then controls the user device when performing an authentication process.

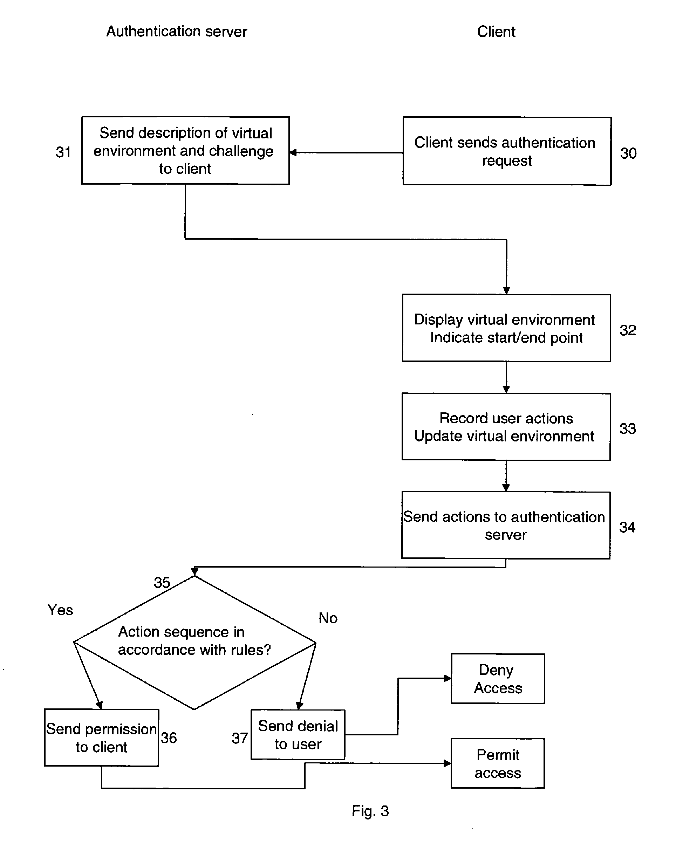

The authentication process used in the first embodiment is now described in relation to figure 3. A user requesting to be authenticated sends an authentication request to the authentication server (30). In response the server sends a description of the virtual environment and a challenge to the user device (31). This challenge instructs the user device which specific starting point and/or a specific end point to select in the virtual environment. The starting point or endpoint is preferably selected randomly by the server and it differs between access attempts. The virtual environment is then displayed on the user device and the starting point and/or end point in the environment is indicated to the user (32). The user then performs the task as a sequence of actions in the virtual environment; the user can for example move through the virtual environment from a starting point to an endpoint, and the user actions are recorded by the authentication client (33). The recorded actions are sent to the authentication server either when the user has finished the task or while the user performs the task (34). The server runs the authentication procedure to check whether the user has performed the task in accordance with the rules (35). If yes an access permit is sent to the client (36) and if no, an access denial is sent (37).

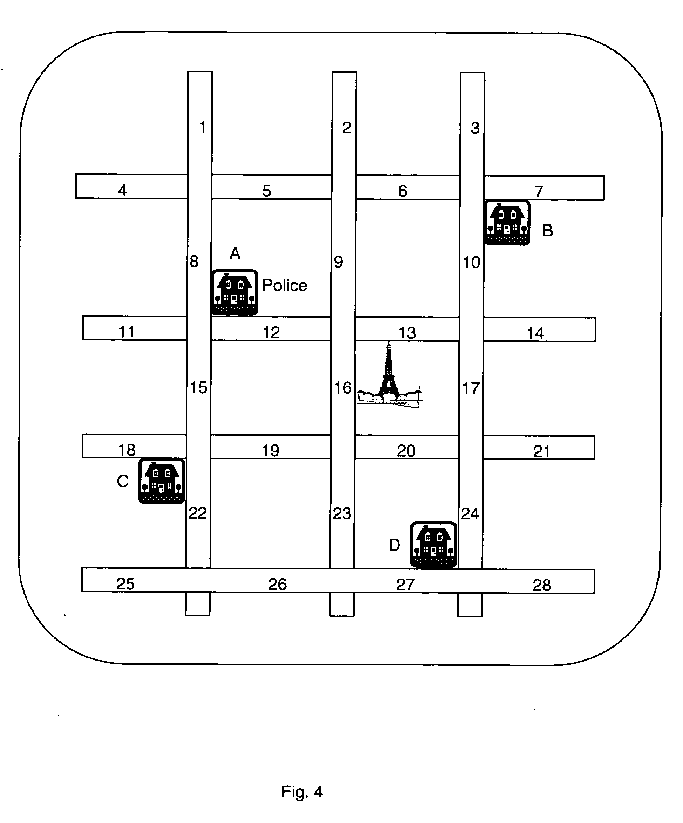

In the first embodiment the virtual environment is a computer game showing a part of a city. As can be seen in figure 4 each section of a road is marked with a number. However, these numbers are not shown to the user but are used by the authentication client that records the user actions in the environment. These numbers are also, as can be seen in figure 7, used to define the stored rules for each user. The user can instead see ordinary road names in the virtual city.

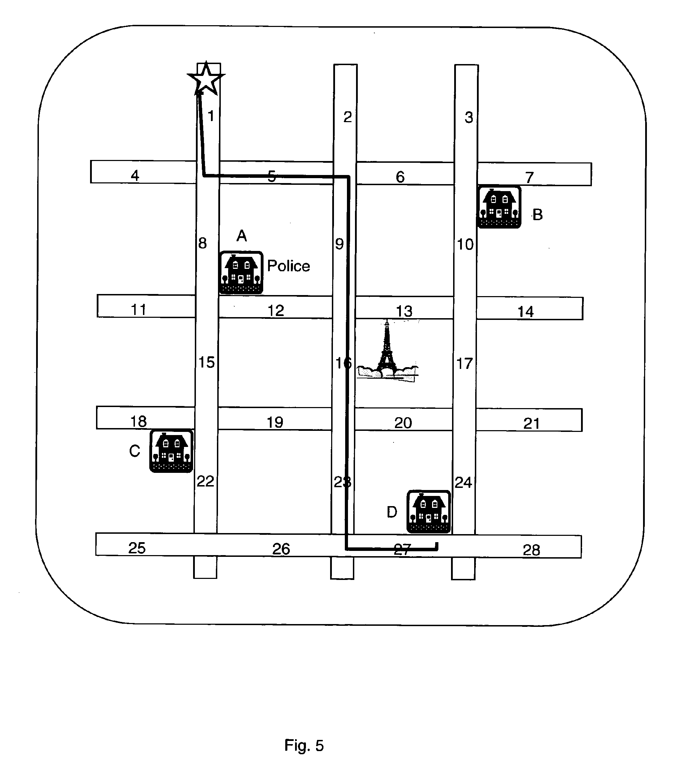

When the user requests to be authenticated, by for example browsing to an Internet bank site and clicking on the Log-in button, the virtual city is displayed on the user device along with an indicated starting point. In figure 5 the starting point, selected by the server and sent to the user device as a challenge, is shown as a star in section 1. The user clicks on start or alternatively the authentication game starts automatically. The user already knows the rules he has to follow since he/she received them in the enrolment phase. One rule can state that he always has to go to a certain place in the virtual environment. By way of example, rules for a user 1 might state that he/she has to go to House D and that he may never pass the police station but must always pass the Eiffel tower. The user can choose any route through the city as long as he ends up at House D and follows the rules. When the user has reached House D the recording of the actions are sent to the authentication server by the authentication client, either automatically or as requested by the user. The recorded actions are in this case that he used sections 1, 5, 9, 16, 23, and 27, see the indicated route in figure 5. The authentication server checks the ID of the user and compares the action sequence it has received for compliance with the stored rules. The server checks that the user has not used sections 8 or 12 but has used either section 13 or section 16 and that the last record is 24 or 27. Since the received action sequence is acceptable, i.e. the user has followed the rules; he is authenticated and granted access.

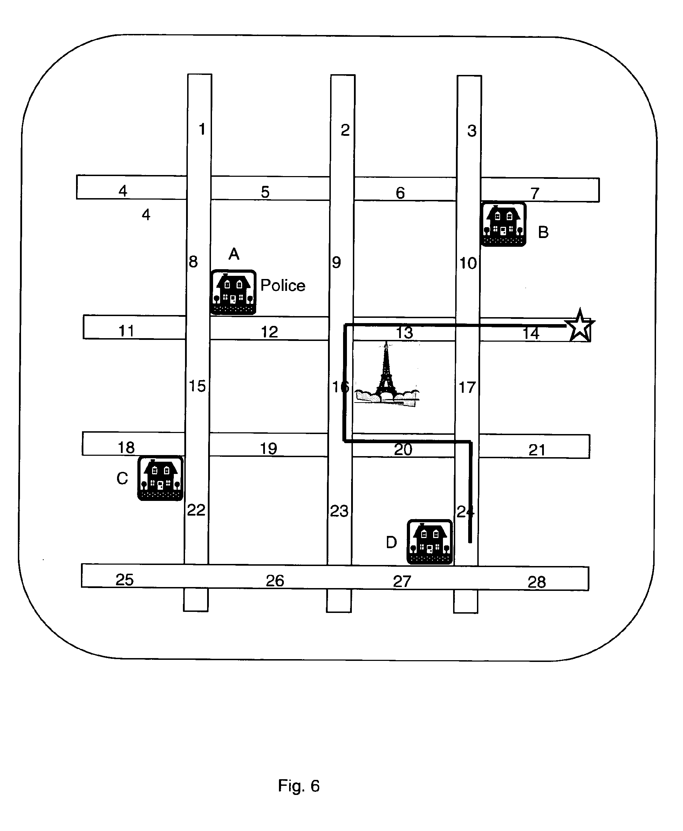

The next time the user requests to be authenticated the server sends a new challenge to the device in that the user gets a new starting point in the virtual environment as can be seen in figure 6. Here, the closest route to House D is along sections 14, 17 and 24. However, according to the rules the user has to pass the Eiffel tower and thus he must use either section 13 or 16 or both. When the user has completed the task the recorded action sequence "14, 13, 16, 20, 24" is sent to the authentication server and compared to the stored rules as described earlier.

Alternatively, a rule for a user can be to always start a task at a certain place in the virtual environment and thus the challenge sent to the user device indicates an end point in the virtual environment which the user has to move to.

In the embodiment described in relation to figures 4 - 6 the random selection of a starting or end point may be constrained by certain minimum requirements with regard to security. For example it can be required that the starting point must be at least three blocks away from the destination.

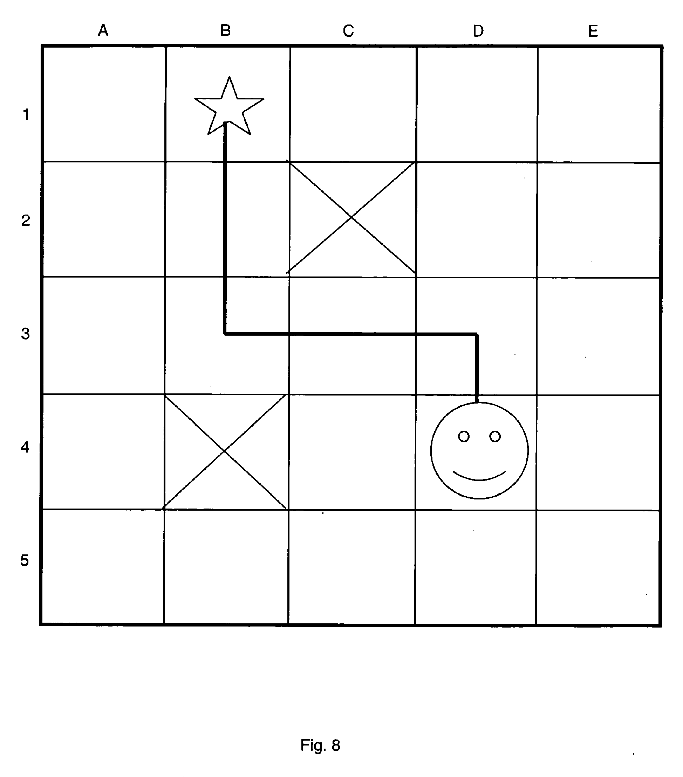

Another embodiment where the virtual environment is in the form of a spreadsheet (e.g. Microsoft Excel, Registered trade mark) is described in relation to figure 8. The spreadsheet can be password protected and in this case the authentication server can be stored on the user device itself while the authentication client can be implemented in the spreadsheet itself, e.g. in a form of a macro written in Visual Basics for Applications that monitors and records user actions. If several users can use the same device and spreadsheet, the server must store a UserID and one or more rules for each user.

A spreadsheet is divided into rows, columns and cells and the virtual environment can utilise this grid structure to define tasks that e.g. require the navigation of the grid. For example, the task, described as a rule, could for User A be to "go to cell D4". The rule in this case is to never click on C2. Below is a table showing example of tasks and rules stored in the authentication server.

| UserID | Rules |
|---|---|
| User A | Rule1: Go to cell D4. |
| | Rule2: If C2 passed then deny access |
| User B | Rule1: Go to cell C3. |
| | Rule2: If B4 passed then deny access |

When user A requests to be authenticated the authentication server sends a challenge to the client instructing the spreadsheet to select a cell where the user must start the authentication process. In figure 8 the selected starting point is in cell B1. User A now knows that the task is to go from cell B1 to cell D4. User A then clicks on cell B2 and this is recorded by the authentication client. This is repeated for all cells he passes on the route to cell D4 where the task is completed. The user actions are recorded as 'B1, B3, C3, D3, and D4'. The recorded action sequence is then sent to the authentication server. The authentication server checks the ID of the user and compares the stored rules to the action sequence it has received. The module checks if C2 has been passed through and since it has not in this example, the user is granted access. However, if C2 has been visited then access is denied.

The relative strength of password-based access control depends on two factors: the 'space' of available passwords and the randomness of user choice of passwords. For example, for a four digit PIN number the theoretical space is 10000 different PIN codes which are fairly evenly used, hopefully with exception of some codes that are deemed to be too obvious such as '0000' or '1234'. Contrasting, regular passwords have a huge theoretical space (8-character password has almost 300 trillion possible combinations), but user choice is not random, with preferences for a small set of passwords (that facilitate the dictionary attack mentioned earlier).
In general, the 'space' is defined by the number of steps the user must take and the number of options at each step.

In the example discussed earlier, the space for the city grid shown on Fig. 4 is of a size similar to the 4-digit password (assuming 7 steps, with 4 choices at each step) while the randomness is assured by the fact that the challenge is provided by the authentication server. Still, the task of 'getting to house D' may be easier for the user to remember than to memorise four random digits.

An attacker trying to be authenticated in an authentication system using either the first or second embodiment is faced by several difficulties. First of all he does not know which rules to follow and thus not where to go or where to start a task. If the attacker anyway figures out that a particular user always goes to house D he does not know that he must never pass the police station but always pass the Eiffel tower. Further, since the challenge, i.e. the starting point or end point in the virtual environment varies each time a user accesses the authentication system, guessing the task and the rules are even more difficult. Even if the attacker sees two access attempts where the starting point is the same the user will probably choose another route to the target the second time, which will confuse the attacker.

Thus, the first and second embodiments have the great advantage of increasing security in authentication systems. A further advantage is that it is easier to remember the rules to follow when performing a task than to remember an ordinary password.

It would be apparent to one skilled in the art that the invention can be embodied in various ways and implemented in many variations. For example, a user could himself create a task to perform in the virtual environment and define the rules associated with the task and confirm to an authentication server or module that this is his "password".
Instead of checking that an action sequence conforms to rules acceptable and/or unacceptable action sequences can be listed and the authentication procedure can check the list rather than checking the rules.
The rules could be stored at other places than the authentication server, for example in a SIM-card on a user device.

The virtual environment could be any kind of environment where a user can move around an item or thing, such as Geographic Information Systems GIS; a map or plan, for example of the tube or railroad network. A text processor such as Microsoft Word can be used as well, for example the task could be to edit a text and the rule can be to delete all words comprising an "f".
The virtual environment could be 3-D view or seen as seen in modern computer games.
Further, the invention can be used for authenticating a user to on-line computer games and other on-line services as well as to applications stored on a user device.

## Claims

1. Method for authenticating a user comprising the steps of:
providing a user in an enrolment phase with rules to be followed in performance of a task which varies between access attempts; said task being performed as a sequence of actions on a user device;
storing an authorisation procedure executable, for each variant of said task, to find whether an action sequence belongs to a plurality of acceptable action sequences which accord with said rules,
receiving in a subsequent access attempt from said user device a recording of a sequence of actions carried out by the user on a user device in performing a given variant of said task;
finding whether said action sequence belongs to a plurality of acceptable action sequences for the given variant of the task by executing said authorisation procedure; and
authenticating the user if the received sequence of actions does belong to a plurality of acceptable action sequences for the given variant of the task.

2. A method according to claim 1 wherein said sequence of actions is performed in a virtual environment displayed on the user device.

3. A method according to claim 2 wherein the virtual environment is a closed world.

4. A method according to claim 2 or 3 where said task is to move through the virtual environment to a target.

5. A method according to any of claims 2 - 4 further comprising the step of generating a challenge, said challenge comprising an instruction to the user device to select a specific variant of the task.

6. A method according to claim 5 wherein said challenge instructs the user device to select a specific starting point for the user from a number of starting points in the virtual environment.

7. A method according to claim 5 wherein said challenge instructs the user device to select a specific end point for the user from a number of end points in the virtual environment.

8. A method according to claims 6 or 7 wherein the starting point or end point is selected randomly.

9. A method according to claim 5 wherein said challenge instructs the user device to select a different virtual environment.

10. A system for authenticating a user comprising
a user device, an authentication server and means for communicating between the device and the server;
the system comprising means for storing, for each user, rules to be followed in performance of a task; and
means for storing an authorisation procedure;
said user device comprising means for receiving user input commands and means for recording user actions when the user performs the task;
said authentication server comprising
means for receiving a recording of a sequence of actions performed by the user on said user device;
means for executing the authorisation procedure for a given variant of the task in order to find whether the received action sequence belongs to a plurality of acceptable action sequences which accord to said rules; and
means for authenticating the user if the received sequence of actions is one of said plurality of acceptable action sequences for the given variant of the task.

11. A system according to claim 9 further comprising a display for displaying a virtual environment in which the user actions are performed.

12. A system according to claim 10 wherein said virtual environment is a closed world.

13. A system according to claims 9, 10 or 11 further comprising means for generating a challenge, said challenge comprising an instruction to the user device to select a specific variant of the task.
